# EUROPEAN PATENT APPLICATION

(11) **EP 4 768 214 A1**
(43) Date of publication of application: **01.07.2026**
(21) Application number: 24383476.9
(22) Date of filing: 30.12.2024
(51) Int. Cl.: B29B 17/02, B29B 17/04, C11D 1/00, C11D 1/66

(54) **MULTILAYER PLASTIC LAMINATE RECYCLING PROCESS AND DELAMINATION SOLUTION**

(71) Applicant: Renascis, Lda, 7300-436 Portalegre (PT)
(72) Inventor: LÓPEZ-OLEAGA ARROSPIDE, Gonzalo, 28002 Madrid (ES); SALGUEIRO ROCHA DA SILVA, Rui Alexandre, 7300-436 Ribeira de Nisa, Portalegre (PT); CORREIA BARBOSA, Cristina Maria, 7300-305 Portalegre (PT)
(74) Representative: Elzaburu S.L.P.

(57) **Abstract**

The present invention refers to a multilayer plastic laminate recycling process and a delamination solution, wherein the process comprises the following steps: providing the multilayer plastic laminate and the delamination solution comprising an alkaline component and an tensioactive; conditioning the multilayer plastic laminate to obtain multilayer flakes comprising a mesh size under 20 mm; contacting the multilayer flakes with the delamination solution being a stirred step at 25 - 90 °C for 1 - 48 h, and the solution/solid ratio (w/w) is higher than 2, to obtain a mixture of a delamination sludge and monolayer plastic flakes; separating the delamination sludge of the mixture of monolayer plastic flakes to obtain a mixture of monolayer flakes; physically separating the mixture of monolayer plastic flakes to obtain monolayer first polymer flakes and drying of the monolayer first polymer flakes to obtain high-purity monolayer flakes.

## Description

### FIELD OF THE INVENTION

The present invention refers to monolayer plastic flakes with high purity, acceptable to obtain transparent plastic films. Specifically, the monolayer flakes are obtained from recycling process of multilayer plastic products (such as PET/EVOH/PE, PET/PE, PET/PCTFE, PP/PE, PP/EVOH/PE, PVC/PE) as raw materials.

### BACKGROUND OF THE INVENTION

Plastic containers or trays are widely used for packaging, storage, transport and display of fresh food or pharmaceutical products. Using a base layer of a polymer such as clear polyethylene terephthalate (PET), polystyrene (PS), polyvinyl chloride (PVC), polypropylene (PP), polyamide (PA), or polychlorotrifluoroethylene (PCTFE) provides a product of high transparency which allows consumers to easily view the contents of the container. Recycled materials (such as recycled PET flakes) can also be used for making containers while offering environmental and sometimes economic benefits.

These containers are usually used as a complete closed packaging, by sealing the rigid container or tray to a lid film, in order to protect food or pharmaceuticals inside from the surrounding environment. To facilitate the sealing of the container to the lid film, and to increase the oxygen and/or moisture barrier properties of the packaging, the base layer (such as PET) is generally produced together with other layers of different polymers (such as PE, cyclic olefin copolymer - COC, PCTFE), what is generally referred to as multi-layer plastic laminates. These multilayer laminates or films are produced both through lamination or coextrusion techniques.

The growing use of recycled plastics creates a need for an economical and efficient method for recycling multilayer plastics laminates, which is the key objective of this invention.

The manufacture of containers of multilayer plastic laminates (such as PET/PE) is done through a thermo-forming process, in which multiple containers are formed from a large and continuous plastic film. During this process, waste material is generated given that part of the material from the continuous film is not used to form the individual containers. This industrial waste is generally referred to as "skeleton" or "post-industrial" waste. Additionally, when consumers use the food or pharmaceutical product and throw to the garbage the plastic container, another waste stream of this material is generated, which generally is referred to as "post-consumer" waste.

These multilayer post-industrial and post-consumer waste cannot be directly recycled into new transparent mono- or multilayer plastic films, as the presence of other second polymer (such as PE) alters the optical properties of the base polymer (such as PET), affecting the transparency of the new film. For example, multilayer PET/PE material cannot be used directly in the manufacture of transparent PET products, since the non-polar PE content of the chain (even in % less than 0.5 %) is emulsified within the mass of the polar PET matrix, forming droplets in sufficient quantities to alter the transparency of the matrix, resulting in a material with low transparency.

Industrially, the haze parameter is used to measure the transparency of plastic products. Haze is a measure of the scattering of light in a transparent material. The degree of light transmission can be measured using ASTM D-1003 (Standard Test Method for Haze, Haze and Light Transmission of Transparent Plastics). This test method is used to evaluate the light transmission and scattering of transparent plastics for a defined sample thickness. It is emphasized that opaque films or haze values greater than 15 are of no commercial interest in the transparent plastic film market.

Furthermore, the presence of other second polymers (such as PE or PCTFE) hinders the conventional technique for processing base polymers (such as PET), whereby the flake is pre-crystallized and dried at elevated temperatures, prior to extrusion into film or into other formed articles. This is because the presence of other second polymers support different conditions. As an example, PE material is softer and stickier at the temperatures normally utilized for crystallizing and drying of PET with a tendency to clump and agglomerate, ultimately hindering the extrusion or injection process.

The patent application EP2650324A1 relates to a method of recycling multilayer laminates or films comprising at least one layer of a first polymer (such as PET) and at least an additional layer of a second polymer (such as PE), wherein the first material is different from the second material. The method comprises the steps of physically separating the first material from the second material through a delamination action to later sort the first material from the second material. Through this method, the additional layers are successfully removed and base polymer (>99% purity) is obtained. The obtained purity is not enough to be used in future processes, like the production of transparent films.

Alternatively, US2017114206A1 refers to a solution to recycle a pressure-sensitive adhesive laminate using a single-phase aqueous solution. The method of recycling a pressure-sensitive adhesive laminate may include providing the single-phase aqueous solution. The single-phase aqueous solution may include water and a surfactant composition. The method may include providing the pressure-sensitive adhesive laminate and contacting the single-phase aqueous solution and the pressure-sensitive adhesive laminate to form a process mixture under conditions effective to provide a recycled portion of the pressure-sensitive adhesive laminate. However, it has been proved that the process conditions described in the application US2017114206A1 under which the aqueous solution operates do not reach sufficient purity for its use in the production of transparent films (i.e. the output PET does not have a purity of >99.9%).

D-limonene is a natural compound extracted from citrus peel oil which gives it its characteristic lemon smell. It is a colorless liquid at room temperature and is relatively stable. It is a type of terpene that has antioxidant properties. D-limonene can be obtained through different extraction and distillation techniques, one of the most effective uses is microwaves. D-limonene has several applications as a biodegradable solvent, aromatic component, flavoring and heat transfer agent, in the food industry as a flavoring and also in the pharmaceutical and cosmetic industries. According to ECHA, D-limonene is biodegradable applying the criteria of OECD Guide 301.

There are several patents that relate D-limonene's delamination ability and the removal of waxes or grease from substrates, for example, the patent application US5478491A defines a solution containing D-Limonene and which are effective with paints: epoxy or urethane base. The patent application US4511488A defines aqueous cleaning compositions based on D-limonene for hard and/or flexible substrates, wherein normally water-immiscible D-limonene is stabilized in clear aqueous solution by the combined effect of carefully selected and proportioned surfactants, and a coupling. Finally, the patent application US4620937A defines clear aqueous solutions containing D-limonene that are stabilized with surfactants and coupling.

It is necessary to provide a new process to obtain high purity base monolayer flakes from multilayer laminates, higher than 99.9 %, acceptable to produce transparent films.

The present invention solves this problem and obtains high purity base monolayer plastic flakes, higher than 99.9 % acceptable to produce transparent films, through the recycling of multilayer plastic laminates (such as PET/EVOH/PE or PET/PE) as raw material that are separated by a delamination solution.

### DESCRIPTION OF THE INVENTION

It is, therefore, the object of the present invention to provide a process of recycling multilayer plastic laminates using a delamination solution.

Regardless of the origin of the plastic laminate, post-consumer or post-industrial waste, the plastic laminate comprises:
- at least one layer of a first polymer,
- at least one layer of a second polymer, and
- at least one layer of an adhesive, between a layer of first polymer and the layer of second polymer.

The first polymer may be polyethylene terephthalate (PET), polypropylene (PP), polyvinyl chloride (PVC), polystyrene (PS), polyamide (PA), polychlorotrifluoroethylene (PCTFE), polyethylene (PE).

On the other hand, the second polymer may be polyethylene (PE), polypropylene (PP), polyamide (PA), cyclic olefin copolymer (COC), polychlorotrifluoroethylene (PCTFE), polyethylene terephthalate (PET) or a polymer matrix of PE, PP, PA, COC, PCTFE, PET with other additives like ethylene vinyl alcohol (EVOH) or polyvinylidene chloride (PVDC) to add some feature or aluminum coated films of previous polymers.

The adhesive may be adhesives based on acrylates, acetates, polyurethanes, etc.

The delamination solution may be an aqueous solution comprising an alkaline component, 1 - 25 % by weight, and a tensioactive, 0.01 - 1.5 % by weight.

The alkaline compound of the delamination solution helps to wash the surface of the plastic flakes. In a preferable embodiment, the alkaline component is NaOH. This component is a standard component in plastic washing processes. In other embodiments, the alkaline component may be KOH.

On the other hand, the tensioactive is a compound that lowers the surface tension of the delamination solution allowing it to penetrate the layers of the multilayer laminate, leaving the adhesive without effect. In one embodiment, the tensioactive may be an ethoxylated alcohol, preferably, an ethoxylated alcohol C1-C20. In other embodiment, the tensioactive may be a surfactant based on alkyl polyglycoxides.

This delamination solution may be used to treat different raw materials, like PET/PE-acrylate laminates.

According to the present invention, the method comprises the following steps:
- Providing the multilayer plastic laminate and the delamination solution.
- Conditioning the multilayer plastic laminate through a grinding process. The result of this step is multilayer flakes comprising a mesh size under 20 mm.
- Contacting the multilayer flakes with the delamination solution to obtain a mixture of monolayer plastic flakes in a delamination sludge
- Separating the sludge of the mixture of monolayer plastic flakes. As result, the remaining product is a mixture of monolayer flakes.
- Physically separating the mixture of monolayer plastic flakes.
- Drying of the monolayer flakes. Finally, the monolayer base polymer flakes (such as PET) obtained by this method present high purity, higher than 99.9 % by weight.

The monolayer base polymer flakes obtained by this method are acceptable for producing transparent films, but they can be used as raw materials for other products, such as bottles.

In contrast with other methods described in the state of the art, it has been proved that to be effective the action of the delamination solution, the contacting step conditions must be controlled. Specifically, according to the current invention, contacting conditions must be defined for effective layer separation:
- stirring time,
- temperature, and
- delamination solution/solid ratio.

In other words, the multilayer flakes remain in contact with the delamination solution long enough to produce a mixture of a delamination sludge with monolayer flakes. In this sense, according to the current invention, the stirring time is higher than 1 hour, preferably in a range of 1 - 48 hours, with an operational temperature controlled between 25 - 90 ºC. In addition, solution/solid ratios greater than or equal to 2 are effective and have a proper delamination effect. However, values lower than 2 proved to be ineffective to separate completely all the multilayer components. In one preferred embodiment, the solution/solid ratio is in the range 2-3.

More specifically, the conditioning step of the multilayer flakes comprises a grinding step, obtaining multilayer flakes comprising a mesh size under 20 mm. Preferably, the grinding step provides flakes comprising a mesh size between 10 -14 mm. This size allows for proper contact between each flake and the separating solution. In this operation, blade mills can be used industrially, in which a rotor equipped with blades places the material in contact with the fixed part of the mill equipped with counter blades or fixed blades.

During the contacting step, delamination solution can efficiently separate the layer of the multilayer flakes. In this step, the adhesive loses its properties once in contact with the delamination solution obtaining a mixture of a delamination sludge and flakes, but, in this case, monolayer flakes, which could be separated in subsequent steps. Particularly, salt compounds are formed, due to the reaction between the terminal end of the adhesive and the alkaline compound.

In one embodiment, wherein the delamination solution further comprises D-limonene, a process similar to a saponification process is carried out. Particularly, D-limonene has an affinity for adhesives, and removes them from the surfaces of the multilayer flakes.

The contacting step may be carried out in common industrial equipment such as batch type washing devices or reactors. These devices may comprise a delamination solution feed system, a solids feed system, a temperature control system, and a discharge system.

In one embodiment, the separation of the sludge and the flakes can be carried out by centrifugation. To carry out this separation industrially, solid-liquid separators may be used, among which vibrating sieves are a common industrial solution. In this step, it is obtained that the solution/solid ratio, which in the previous step had values higher than 2, reaches values close to 0. As example, 0.01 is a common value achieved by centrifugal separators or centrifugal dryers.

In other embodiment, the separation of the mixture of plastic flakes can be carried out by flotation. Industrially, there is equipment such as decanters, centrifugal decanters or hydrocyclones which can physically separate different polymers.

In other embodiment, the drying is a combined process of centrifugation and the contact with an air stream. Industrially there are centrifugal dryers, with hot air, fluidized beds, or combinations of these. These dryers must achieve humidity for output flakes of less than 1% and can be by mechanical action, in which the particles are hit in front of perforated sieves and thus water droplets are removed from the surface. The fluidized bed type and hot air beds place the particles in contact with hot air currents, achieving the elimination of surface moisture.

After all this process, the output base polymer material thus may be used to obtain transparent plastic films, through one additional step, where the high purity monolayer flakes are run into a film production system, such as an extrusion system.

In one embodiment, the delamination solution further comprises D-limonene. Specifically, the delamination solution comprises 1 - 50 % by weight of D-limonene.

In contrast with the previous embodiment, the delamination solution comprising D-limonene increases the availability of recycling additional raw materials. Specifically, the delamination of many different multilayer materials based on different adhesives (such as polyurethane), can only be effectively delaminated when D-limonene is comprised in the delamination solution.

In this embodiment, the tensioactive lowers the surface tension of the delamination solution allowing it to penetrate the layers of the PET/PE laminate and leaving the adhesive without effect, as well as the two-component delamination solution process. However, in the three-component delamination solution, comprising D-limonene, the tensioactive acts as emulsifier of the D-limonene in the delamination solution, which would otherwise separate into different layers/phases.

| | Alkaline component (NaOH) | Tensioactive | | D-limonene | PET Purity |
|---|---|---|---|---|---|
| | | Ethoxylated alcohol | Alkyl poliglycoxide | | |
| M1 | 0,5 | 0,01 | - | 0 | <99,9 |
| M2 | 1 | 0,01 | - | 0 | >99,9 |
| M3 | 1 | 0 | - | 0 | <99,9 |
| M4 | 5 | - | 0,01 | 0 | >99,9 |
| M5 | 10 | 0,01 | - | 0 | >99,9 |
| M6 | 15 | - | 0,01 | 0 | >99,9 |
| M7 | 20 | 0,01 | - | 0 | >99,9 |
| M8 | 25 | - | 0,01 | 0 | >99,9 |
| M9 | 1 | - | 0,5 | 0 | >99,9 |
| M10 | 5 | 0,5 | - | 0 | >99,9 |
| M11 | 10 | 0,5 | - | 0 | >99,9 |
| M12 | 15 | - | 0,5 | 0 | >99,9 |
| M13 | 20 | - | 0,5 | 0 | >99,9 |
| M14 | 25 | 0,5 | - | 0 | >99,9 |
| M15 | 1 | - | 1 | 0 | >99,9 |
| M16 | 5 | - | 1 | 0 | >99,9 |
| M17 | 10 | 1 | - | 0 | >99,9 |
| M18 | 15 | 1 | - | 0 | >99,9 |
| M19 | 20 | 1 | - | 0 | >99,9 |
| M20 | 25 | - | 1 | 0 | >99,9 |
| M21 | 1 | 1,5 | - | 0 | >99,9 |
| M22 | 5 | 1,5 | - | 0 | >99,9 |
| M23 | 10 | - | 1,5 | 0 | >99,9 |
| M24 | 15 | - | 1,5 | 0 | >99,9 |
| M25 | 20 | - | 1,5 | 0 | >99,9 |
| M26 | 25 | 1,5 | - | 0 | >99,9 |
| M27 | 0,5 | 0,5 | - | 1 | <99,9 |
| M28 | 5 | 0,5 | - | 1 | >99,9 |
| M29 | 15 | - | 0,5 | 1 | >99,9 |
| M30 | 25 | 0,5 | - | 1 | >99,9 |
| M31 | 5 | 0 | - | 1 | <99,9 |
| M32 | 5 | 1 | - | 1 | >99,9 |
| M33 | 15 | - | 1 | 1 | >99,9 |
| M34 | 25 | 1 | - | 1 | >99,9 |
| M35 | 5 | 1,5 | - | 1 | >99,9 |
| M36 | 15 | - | 1,5 | 1 | >99,9 |
| M37 | 25 | 1,5 | - | 1 | >99,9 |
| M38 | 5 | 0,5 | - | 10 | >99,9 |
| M39 | 15 | - | 0,5 | 10 | >99,9 |
| M40 | 25 | 0,5 | - | 10 | >99,9 |
| M41 | 5 | 1 | - | 10 | >99,9 |
| M42 | 15 | - | 1 | 10 | >99,9 |
| M43 | 25 | 1 | - | 10 | >99,9 |
| M44 | 5 | 1,5 | - | 10 | >99,9 |
| M45 | 15 | - | 1,5 | 10 | >99,9 |
| M46 | 25 | 1,5 | - | 10 | >99,9 |
| M47 | 5 | 0,5 | - | 25 | >99,9 |
| M48 | 15 | - | 0,5 | 25 | >99,9 |
| M49 | 25 | 0,5 | - | 25 | >99,9 |
| M50 | 5 | 1 | - | 25 | >99,9 |
| M51 | 15 | - | 1 | 25 | >99,9 |
| M52 | 25 | 1 | - | 25 | >99,9 |
| M53 | 5 | 1,5 | - | 25 | >99,9 |
| M54 | 15 | - | 1,5 | 25 | >99,9 |
| M55 | 25 | 1,5 | - | 25 | >99,9 |
| M56 | 5 | 0,5 | - | 50 | >99,9 |
| M57 | 15 | - | 0,5 | 50 | >99,9 |
| M58 | 25 | 0,5 | - | 50 | >99,9 |
| M59 | 5 | 1 | - | 50 | >99,9 |
| M60 | 15 | - | 1 | 50 | >99,9 |
| M61 | 25 | 1 | - | 50 | >99,9 |
| M62 | 5 | 1,5 | - | 50 | >99,9 |
| M63 | 15 | - | 1,5 | 50 | >99,9 |
| M64 | 25 | 1,5 | - | 50 | >99,9 |

As previously mentioned, the present invention solves how to obtain high purity monolayer material, higher than 99.9 %, through the recycling of multilayer plastic laminates as raw material that are separated by a delamination solution.

### Example 1 - Production of high purity monolayer PET flakes

### PET/ PE - acrylate mixture (E1)

The PET/PE laminate presented a thickness of 370 micron where 340 correspond to PET and 30 correspond to PE (purity: 92:8 PET:PE). The two layers were held together by 2-component acrylate lamination adhesive with 30% of solid in his composition. This 370-micron PET/PE laminate is crushed, and 400 kg are fed to a 4 m³ SOREMA washing reactor containing 2000 liters of a delamination solution. Specifically, the delamination solution comprises 3,5% (w/w) sodium hydroxide and 1.5% (w/w) of 85% water solution of ethoxylated C11-C13 alcohol.

The resulting process mixture was stirred, 100 RPM, at about 74 °C for 24 h.

The solid content is sent to a 50 m³ 8 m high decanter where the PET is removed by pumping through the bottom and the PE through blades at the top. The PET removed from the bottom is dried in combination with a 22 kW vertical centrifuge type mechanical dryer and hot air at 140ºC with a contact length of 20m and tube diameter of 60mm.

The PET flakes obtained by this method comprises a high purity, higher than 99.9 %, acceptable to produce transparent films.

| RAW MATERIAL: PET/PE- acrylate | |
|---|---|
| PURITY (PET:PE) | 92:8 |
| Grinding | 10 mm |
| NaOH | 3.5 % |
| EtOH | 1.5 % |
| D-Limonene | 0 |
| Delamination solution:Solid | 2:1 |
| Temperature | 74 ºC |
| Agitation | 100 rpm |
| Contacting time | 24 hours |
| FINAL PURITY | 99.9 % |

### PET/ PE - acetate mixture (E2)

The PET/PE laminate presented a thickness of 370 micron where 340 correspond to PET and 30 correspond to PE (purity: 92:8 PET:PE). The two layers were held together by an acetate-based adhesive. This 370-micron PET/PE laminate is crushed, and 400 kg are fed to a 4 m³ SOREMA washing reactor containing 2000 liters of a delamination solution. Specifically, the delamination solution comprises 3,5% (w/w) sodium hydroxide and 1.5% (w/w) 90% water solution of ethoxylated C9-C12 alcohol.

The resulting process mixture was stirred, 100 RPM, at about 85 °C for 24 h.

The solid content is sent to a 50 m³ 8 m high decanter where the PET is removed by pumping through the bottom and the PE through blades at the top. The PET removed from the bottom is dried in combination with a 22 kW vertical centrifuge type mechanical dryer and hot air at 140ºC with a contact length of 20m and tube diameter of 60mm.

The PET flakes obtained by this method comprises a high purity, higher than 99.9 %, acceptable to produce transparent films.

| RAW MATERIAL: PET/PE- acetate | |
|---|---|
| PURITY (PET:PE) | 92:8 |
| Grinding | 10 mm |
| NaOH | 3.5 % |
| EtOH | 1.5 % |
| D-Limonene | 0 |
| Delamination solution:Solid | 2:1 |
| Temperature | 85 ºC |
| Agitation | 100 rpm |
| Contacting time | 24 hours |
| FINAL PURITY | 99.9 % |

### PET/ PE - acrylate mixture (E3)

The PET/PE laminate presented a thickness of 370 micron where 340 correspond to PET and 30 correspond to PE (purity: 92:8 PET:PE). The two layers were held together by 2-component acrylate lamination adhesive with 30% of solid in his composition. This 370-micron PET/PE laminate is crushed, and 400 kg are fed to a 4 m³ SOREMA washing reactor containing 2000 liters of a delamination solution. Specifically, the delamination solution comprises 3,5% (w/w) sodium hydroxide and 1.5% (w/w) 90% water solution of ethoxylated C9-C12 alcohol.

The resulting process mixture was stirred, 100 RPM, at about 74 °C for 24 h.

The solid content is sent to a 50 m³ 8 m high decanter where the PET is removed by pumping through the bottom and the PE through blades at the top. The PET removed from the bottom is dried in combination with a 22 kW vertical centrifuge type mechanical dryer and hot air at 140ºC with a contact length of 20m and tube diameter of 60mm.

The PET flakes obtained by this method comprises a high purity, higher than 99.9 %, acceptable to produce transparent films.

| RAW MATERIAL: PET/PE- acrylate | |
|---|---|
| PURITY (PET:PE) | 92:8 |
| Grinding | 10 mm |
| NaOH | 3.5 % |
| EtOH | 1.5 % |
| D-Limonene | 0 |
| Delamination solution:Solid | 2:1 |
| Temperature | 74 ºC |
| Agitation | 100 rpm |
| Contacting time | 24 hours |
| FINAL PURITY | 99.9% |

### PET/ PE - 50%acrylate/25% acetate/25% PU mixture (E4)

The PET/PE laminate presented a thickness of 370 micron where 340 correspond to PET and 30 correspond to PE (purity: 92:8 PET:PE). The two layers were held together by a 50%acrylate/25% acetate/25% PU adhesive mixture. This 370-micron PET/PE laminate is crushed, and 400 kg are fed to a 4 m³ SOREMA washing reactor containing 2000 liters of a delamination solution.

In one embodiment the delamination solution comprises 3,5% (w/w) sodium hydroxide and 1.5% (w/w) 90% water solution of ethoxylated C9-C12 alcohol.

In other embodiment, the delamination solution comprises 3,5% (w/w) sodium hydroxide, 1.5% (w/w) EtOH and 5 % (w/w) D-limonene.

The resulting process mixtures were stirred, 100 RPM, at about 85 °C for 24 h.

The solid content is sent to a 50 m³ 8 m high decanter where the PET is removed by pumping through the bottom and the PE through blades at the top. The PET removed from the bottom is dried in combination with a 22 kW vertical centrifuge type mechanical dryer and hot air at 90ºC with a contact length of 20m and tube diameter of 60mm.

Only the PET flakes obtained by the method using a delamination solution comprising D-limonene comprises a high purity, higher than 99.9 %, acceptable to produce transparent films.

| RAW MATERIAL: PET/PE- 50%acrylate/25% acetate/25% PU | | |
|---|---|---|
| PURITY (PET:PE) | 92:8 | 92:8 |
| Grinding | 10 mm | 10 mm |
| NaOH | 1.5 % | 3.5 % |
| EtOH | 0.5 % | 1.5 % |
| D-Limonene | - | 5% |
| Delamination solution:Solid | 2:1 | 2:1 |
| Temperature | 85 ºC | 85 ºC |
| Agitation | 100 rpm | 100 rpm |
| Contacting time | 24 hours | 24 hours |
| FINAL PURITY | 99.3% | 99.9 % |

### PET/ PCTFE - acrylate mixture (E5)

The PET/PCTFE laminate presented a thickness of 240 microns where 190 corresponds to PET and 50 corresponds to PCTFE (purity: 72:28 PET: PCTFE). The two layers were held together by 2-component acrylate lamination adhesive with 30% of solid in his composition. This 240-micron PET/PCTFE laminate is crushed, and 200 g are fed to a 40 L pilot scale washing reactor containing 10 liters of a delamination solution. Specifically, the delamination solution comprises 4% (w/w) sodium hydroxide and 1.5% (w/w) of 90% water solution of ethoxylated C9-C12 alcohol.

The resulting process mixture was stirred, 100 RPM, at about 70 °C for 24 h.

The solid content is sent to a 3 L decanter with NaOH 50% as separation fluid. In this 3L decanter the PET is removed for the top part of the fluid. The separated PCTFE y removed from the bottom part of the 3 L decanter with NaOH 50% as separation fluid. After separating the two plastics, the two fractions are washed with hot water at 60°C three times consecutively to remove the remnants of the decantation fluid and the separating solution.

The two fractions without water are placed in a drying oven where they are kept at 60°C for 16 hours to eliminate surface moisture.

The PET flakes obtained by this method comprises a high purity, higher than 99.9 %, acceptable to produce transparent films.

| RAW MATERIAL: PET/ PCTFE - acrylate | |
|---|---|
| PURITY (PET/ PCTFE) | 72:28 |
| Grinding | 10 mm |
| NaOH | 4% |
| EtOH | 1.5 % |
| D-Limonene | 0 |
| Delamination solution: Solid | 50:1 |
| Temperature | 70 ºC |
| Agitation | 100 rpm |
| Contacting time | 24 hours |
| FINAL PURITY | 99.9 % |

### Example 2: Optical properties determination

The monolayer PET flakes obtained by the process according to the current solution are sent to the extruder.

Particularly, the monolayer PET flakes obtained by example 1 were used in production of transparent PET film in a Reifenhäuser's twin-screw extruder.

Four samples of mono PET film with 350 microns were produced.

| Sample | Thickness (my) | PET recipe |
|---|---|---|
| E1 | 350 | 80%PETV+20% MONO PET from PET/ PE - acrylate mixture |
| E2 | 350 | 80%PETV+20% MONO PET from PET/ PE - acetate mixture |
| E3 | 350 | 80%PETV+20% MONO PET from PET/ PE - acrylate mixture |
| E4 | 350 | 80%PETV+20% MONO PET from PET/ PE - 50%acrylate/25% acetate/25% PU mixture |

It is fed at 20% with the remaining 80% being a mixture of virgin PET.

The test takes place until the film is stabilized, and samples are taken for analysis. The optical properties are analyzed using a Konic Spectrophotometer for Minolta CM-5 Transmittance (SCI specular components Measuring area 30 mm), with the following result:

| | L* (A) | a* (A) | b* (A) | Haze (ASTM D1003-97)(A) |
|---|---|---|---|---|
| E1 | 96,1 | 0,14 | 0,37 | 1,37 |
| E2 | 94,6 | -0,04 | 0,37 | 2,71 |
| E3 | 95,99 | 0,15 | 0,51 | 1,29 |
| E4 | 95,67 | 0,16 | 0,45 | 7,40 |

A previously mentioned, opaque films or haze values greater than 15 have low commercial interest. In contrast, samples E1-E4, obtained following the recycling process described in the present invention, comprise a haze value lower than 15, being acceptable to produce, for example, transparent plastic films.

## Claims

1. A multilayer plastic laminate recycling process using a delamination solution, wherein the multilayer plastic laminate comprises at least one layer of a first polymer, at least one layer of a second polymer and at least one layer of an adhesive, between the layer of the first polymer and the layer of the second polymer; **characterized in that** the method comprises the following steps:
- providing the multilayer plastic laminate and the delamination solution, wherein the delamination solution is an aqueous solution comprising an alkaline component, 1 - 25 % by weight, and a tensioactive, 0.01 - 1.5 % by weight;
- conditioning the multilayer plastic laminate to obtain multilayer flakes comprising a mesh size under 20 mm,
- contacting the multilayer flakes with the delamination solution to obtain a mixture of a delamination sludge and monolayer plastic flakes, wherein the contacting step is a stirred step at 25 - 90 °C for 1 - 48 h, and the solution/solid ratio (w/w) is higher or equal than 2,
- separating the delamination sludge of the mixture of monolayer plastic flakes to obtain a mixture of monolayer flakes,
- physically separating the mixture of monolayer plastic flakes to obtain monolayer first polymer flakes,
- drying of the monolayer first polymer flakes to obtain monolayer first polymer flakes with a purity higher than 99.9 % by weight.

2. The process according to claim 1, wherein the process further comprises feeding the monolayer first polymer flakes with a purity higher than 99.9% into a production system.

3. The process according to any one of claims 1 to 2, wherein the multilayer flakes resulting of the conditioning step comprise a mesh size in the range of 10 - 14 mm.

4. The process according to any one of claims 1 to 3, wherein the separation of the sludge and the flakes is carried out by centrifugation.

5. The process according to any one of claims 1 to 4, wherein the separation of the mixture of plastic flakes is carried out by flotation.

6. The process according to any one of claims 1 to 5, wherein the drying is a combined process of centrifugation and contact with an air stream.

7. The process according to any one of claims 1 to 6, wherein the alkaline component of the delamination solution is NaOH.

8. The process according to any one of claims 1 to 7, wherein the tensioactive of the delamination solution is an ethoxylated alcohol, preferably, ethoxylated alcohol C1-C20; or a surfactant based on alkyl polyglycoxides.

9. The process according to any one of claims 1 to 8, wherein the first polymer is PET, PP, PVC, PS, PA, PCTFE, PE,

10. The process according to any one of claims 1 to 9, wherein the second polymer is PE, PP, PA, COC, PCTFE, PET or a polymer matrix of PE, PP, PA, COC, PCTFE, PET.

11. The process according to any one of claim 1 to 9, wherein the delamination solution further comprises D-limonene, 1 - 50 % by weight.

12. A delamination solution **characterized in that** it comprises
- an alkaline component, 1 - 25 % by weight,
- an ethoxylated alcohol tensioactive, 0.01 - 1.5 % by weight, and
- D-limonene, 1 - 50 % by weight.
